# EUROPEAN PATENT APPLICATION

(11) **EP 0 692 638 A1**
(43) Date of publication of application: **17.01.1996**
(21) Application number: 95110633.5
(22) Date of filing: 07.07.1995
(51) Int. Cl.: F15B 13/00, F16J 15/16, F16J 15/02

(54) **Device for wiring solenoid valves to air-distribution subbases**

(30) Priority: 13.07.1994 IT MI941456
(71) Applicant: UNIVER S.p.A., I-20128 Milano (IT)
(72) Inventor: Migliori, Luciano, Milano due, I-20090 Segrate (Milan) (IT)
(74) Representative: Coloberti, Luigi

(57) **Abstract**

A device for wiring solenoid valves (11) to air-distribution subbases (10), comprises a tubular member (15) housing the electrical leads (14) provided with means (17, 18) for removably connecting at one side of subbase (10); the tubular member (15) has a longitudinal slit (21) closed by an elastically yielding seal member (24) so as to allow the electrical leads (14) to pass through the slit (21) outside the tubular member (15) in the region of each solenoid valve (11). A removable covering member (28) is provided to protect the leads (14) outside the tubular member (15) in the region of each solenoid valve (10).

## Description

The present invention relates to a wiring system for wiring solenoid valves to air-distribution and supporting subbases normally provided for connecting several users or service points to a pressurised-air source, under the control of a programmable logic unit (PLC) to which the individual solenoid valves must be suitably connected.

In carrying out pneumatic systems for controlling and/or distributing compressed air, individual solenoid valves are normally fixed to an air-distribution subbase in positions which are variable or are already preset on the subbase, depending on the required application. The electrical windings of the individual solenoid valves must then be wired, i.e. must be connected by electrical leads to a multiple socket provided at one end of the said subbase for connection to a logic control unit.

At present, wiring of the various connecting leads between the solenoid valves and the multiple socket is effected in an entirely rudimentary manner, using for example U-shaped channel sections and a closing lid for housing the leads, suitably fixed to one side of the subbase.

The use of conventional wiring systems therefore requires long and complex machining operations owing to the need to bore the individual channel section housing the leads in predetermined positions for mounting of the solenoid valves so that the individual connecting wires can be drawn-off and passed outside, without the possibility for subsequent variations or modifications; furthermore, the leads remain entirely free and exposed to the external environment, being unprotected between the channel section and the connection to winding of the solenoid-valve.

The object of the present invention is to provide a wiring device for wiring solenoid valves to air-distribution subbases, as referred to above, by means of which it is possible to overcome the drawbacks of conventional systems.

More particularly, the object of the invention is to provide a wiring device for wiring solenoid valves to subbases and the like by means of which it is possible to position and freely displace the solenoid valves on the subbase, before or after wiring of the leads, without any constraints and without having to provide in advance any passages for the connecting leads.

A further object of the invention is to provide a device as referred to above, by means of which it is possible to obtain complete protection of the electrical leads in an air-tight environment which avoids any contact with the exterior.

Yet another object of the present invention is to provide a device for wiring solenoid valves, as referred to above, by means of which the wiring operations can be performed in an extremely rapid and simple manner, without having to perform prior mechanical operations, allowing also the individual leads to be drawn-off in any desired position, along the subbase, in the region of the solenoid valve or solenoid valves to be connected.

These and further objects and advantages of the invention may be obtained by a wiring device for wiring solenoid valves to air-distribution subbases, according to the present invention, characterized by comprising a tubular member for housing the leads, having on one side means for removably connecting said tubular member to the subbase, and in which the tubular member is provided on opposite side with a longitudinal slit for drawing off the electrical leads, and sealing means of elastically yielding material longitudinally extending to said slit, said sealing means being urged to yieldingly adher to one edge of the slit to allow the drawing-off of said leads from one side and along said wiring device.

Preferably the electrical leads for connection to each solenoid valve, between the longitudinal slit of the tubular housing member and an electrical connection to a solenoid valve, are further protected by a covering member, removably and tiltably fastened to the said tubular member housing the leads.

A particular embodiment of a wiring device according to the invention, will be illustrated in greater detail hereinbelow, with reference to the accompanying drawings in which:
- Fig. 1: is a top view of a general type of subbase with a plurality of solenoid valves provided with a wiring device according to the invention;
- Fig. 2: is an enlarged cross-sectional view along the line 2-2 of Figure 1;
- Fig. 3: is an enlarged longitudinal sectional view at the position of a solenoid valve, and made along the line 3-3 of Figure 2;
- Fig. 4: is a sectional view similar to that of Figure 1, without the solenoid valve and with the covering member tilted in the open position.

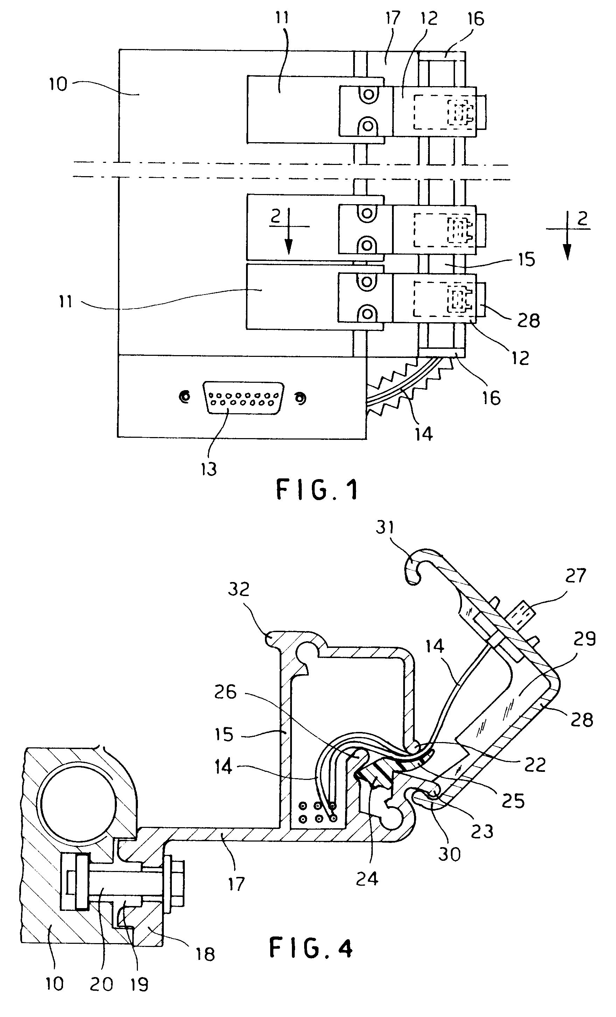

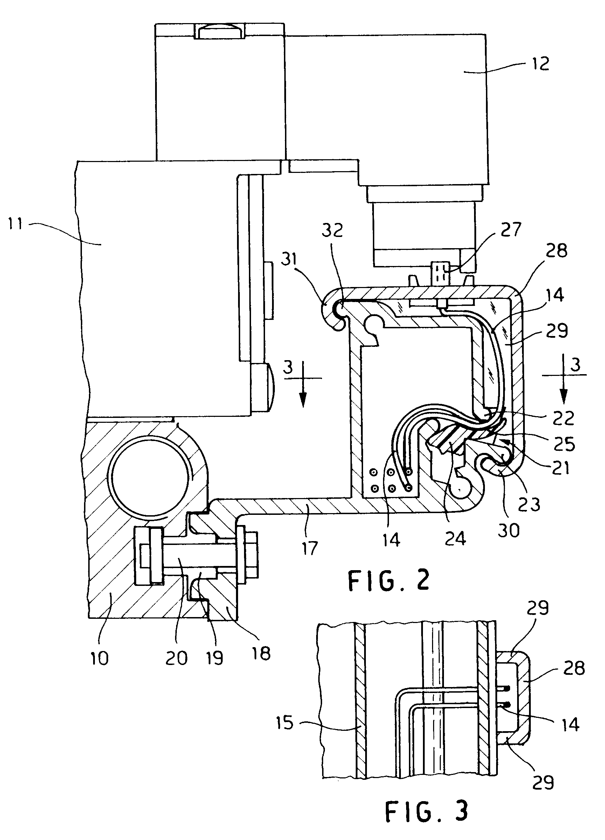

With reference to the Figures, in particular to Figures 1 and 2, reference 10 denotes a general type of subbase for distributing compressed-air to a plurality of solenoid valves 11, having windings 12 which must be connected to a multiple socket 13 via a plurality of electrical leads 14, for example in order to connect the solenoid valves 11 to a programmable control unit, not shown.

According to the present invention, for wiring the solenoid valves and the electrical leads 14 to the subbase 10, use is made of a channel shaped section in the form of a tubular member 15, for example made of aluminium, closed at either ends by suitable plugs 16, one of which has passing through it electrical leads 14 for connection to the multiple socket 13.

The tubular member 15 on the side facing the subbase 10 is provided with a longitudinal wing 17 extending from a side wall of the tubular member 15, said wing 17 being provided with a flanged down edge portion 18 defining a fastening means which fits into a corresponding seat 19 longitudinally extending on one side of the subbase 10, for fixing to the latter said tubular member 15 by means of bolts 20 or other suitable fastening means.

The tubular section 15, in the example shown, on the side opposite to the fixing wing 17, is provided with a wide longitudinal slit 21 having spaced apart opposite edges 22 and 23 at a suitable distance from one another.

The slit 21 is normally closed by a seal means 24 of elastically yielding material, longitudinally extending and directly fixed to one side of the tubular member 15 housing the leads.

More precisely, in the example shown, the seal member 24 comprises a longitudinal strip of plastic material having an enlarged fastening portion 24 and a lip portion 25 which extends through the slit 21, said lip portion 25 being sealingly urged against the edge 22 of the slit 21 as a result of the elasticity of the said material with which the seal 24 is made, so as to have a sealing action against the upper edge 22 of the slit allowing the drawing-off of the leads 14; in turn the enlarged base portion 24 of the seal member is tightely fixed between the lower edge 23 of the slit 21 and an internal wall 26 which partially extends, in a position spaced apart from the slit, inside the said tubular member 15.

In this way each individual electrical lead 14 may be drawn-off from the slit 21 by slightly bending or elastically deforming the lip 23 of the seal at that point, which in this way maintains the air-tight conditions inside the said tubular member. Moreover, since the slit 21 and the seal 24 extend over the entire length of the tubular member 15, it is thus possible to drawn-off the leads 14 in any desired position, in the region of each winding 12 of the solenoid valves, independently of the position of the solenoid valve itself.

As initially mentioned, according to the embodiment shown, the device according to the invention comprises, in the region of each solenoid valve 11, an additional covering member 28 for protecting the portion of electrical leads 14 extending between the slit 21 of the tubular housing member and an electrical terminal 27 connected to the winding 12 of the said solenoid valve.

In the example shown, this covering member, denoted by reference 28, is in the form of a right-angled member, of plastic material, slidably supported and removably engaged onto the tubular member 15; said covering member 28 comprises front and upon wall as well as side walls 29 having shapped edges which fit against the external surfaces of the corresponding front and upper walls of the tubular member 15 for the leads.

The covering member 28 is provided with hook-shaped ends 30 and 31 which, by means of elastic deformation of the material, snap-engage with and disengage from the lower edge 23 protruding from the slit 21, and a rib 32 on the opposite corner of the tubular member 15. More particularly, as can be noted from a comparison of Figures 2 and 4, the hook-shaped end 30 of the covering member 28 and the corresponding edge 23 of the longitudinal slit 21 are suitably rounded to form a hinging connection which, if necessary, enables the said covering member 28 to be laterally tilted by simply disengaging the hook-shaped edge 31 from rib 32.

The example illustrates preferably the use of a covering member 28 in the region of each solenoid valve for protecting the external portion of the individual leads; however, without departing from the innovative principle which mainly consists in the use of a shaped tubular member for housing the electrical leads, having a longitudinal slit closed by an elastically flexible seal, within the scope of the present invention other solutions are possible, i.e. solutions which envisage the use of a single or common covering member for several solenoid valves, or the replacement of the said covering member with other covering means for keeping the electrical leads 14 substantially protected inside the tubular member; this could be achieved for example by arranging the slit 21 and the respective sealing seal 24, on the top wall, underneath the windings 12 of the solenoid valves and by providing, in such a case, means suitable for fastening the individual electrical terminals 27 removably and slidably along a suitably shaped projecting edge of the slit 21.

## Claims

1. Device for wiring solenoid valves (11) to a compressed-air distribution and supporting subbase (10), according to which a plurality of solenoid valves (11) are connected to electrical leads (14) housed in a channel shaped section fixed to one side of the subbase (10), characterized in that said channel shaped section is in the form of a tubular member (15) provided with an elongated slit (21) for the drawing-off of the leads (14), said slit (21) longitudinally extending on one side of the tubular member (15), and in that a seal member (24, 25) of elastically yielding material has been provided to sealingly close the slit (21), said seal member (24, 25) longitudinally extending to the tubular member (15) and being yieldingly urged against a lip (22) of said slit (21) to allow the electrical leads (14) to be drawn-off from the tubular member (15) at the position of each solenoid valve (11).

2. Device according to Claim 1, further characterized by comprising covering means (28) for protecting the electrical leads (14) between the longitudinal slit (21) of the tubular member (15) and a connection to the solenoid valve (11).

3. Device according to Claim 2, characterized in that said covering means (28) is removably fastened to said tubular member (15) housing the leads (14).

4. Device according to the preceding claim 1, in which each solenoid valve (11) comprises an actuating solenoid (12) laterally extending to the valve body (11) and in which said tubular member (15) housing said lends (14) is positioned underneath the aforementioned solenoid (12), characterized in that said longitudinal slit (21) is provided on the side of the tubular member (15) which is opposite to the supporting subbase (10), and in that said covering means (28) for protecting said leads (14) is in the form of a right-angled covering member provided with shaped side walls (29) fitting against the external surface of corresponding wall portions of the aforementioned tubular member (15).

5. Device according to the preceding claim 4, characterized in that said covering member (28) comprises hook-shaped end portions (30, 31), at least one (31) of which snap-engages with a longitudinal rib (32) provided on one side of the tubular member (15) in respect of the longitudinal slit (21), while the other hook-shaped end portion (30) hingeably engages onto a projecting edge (23) of the tubular member (15) on the other side of said slit (21).

6. Device according to the preceding claims, characterized in that said electrical connection (27) of the solenoid valve (11) to the electrical leads (14) is positioned on said covering member (28) of the device.

7. Device according to Claim 2, characterized in that said covering means (28) for the leads (14) are in the form of an individual covering member for each solenoid valve (11).

8. Device according to Claim 7, characterized in that said covering member (28) is longitudinally slidable on said tubular member (15) housing the leads (14).

9. Device according to Claim 1, characterized in that said sealingly means (24, 25) for closing the slit (21) comprise an elongated sealing member having an enlarged base portion (24) fixed between one edge (23) of the slit (21) and a wall portion (26) inside the tubular member (15), and an elastically flexible lip portion (25) longitudinally extending over said slit (21), said lip portion (25) being elastically urged to sealingly adhere against the other edge (22) of the slit (21).
